# EUROPÄISCHE PATENTSCHRIFT

(11) **EP 3 193 451 B1**
(45) Veröffentlichungstag und Bekanntmachung des Hinweises auf die Patenterteilung: **15.07.2020**
(21) Anmeldenummer: 16198369.7
(22) Anmeldetag: 11.11.2016
(51) Int. Cl.: H03K 19/0175, H03K 19/0185, H03K 17/22, H03K 19/177

(54) **VERFAHREN ZUR EINSTELLUNG DER PULL-WIDERSTÄNDE EINES ELEKTRONISCHEN BAUSTEINS**
METHOD FOR ADJUSTING THE PULL RESISTANCE OF AN ELECTRONIC COMPONENT
PROCÉDÉ DE RÉGLAGE DES RÉSISTANCES DE POLARISATION À L'ALIMENTATION D'UN COMPOSANT ÉLECTRONIQUE

(30) Priorität: 12.01.2016 DE 102016200245
(43) Veröffentlichungstag der Anmeldung: 19.07.2017
(73) Patentinhaber: Siemens Aktiengesellschaft, 80333 München (DE)
(72) Erfinder: Eppensteiner, Friedrich, 3620 Spitz (AT); Ghameshlu, Majid, 1110 Wien (AT); Matschnig, Martin, 3430 Tulln (AT); Taucher, Herbert, 2340 Mödling (AT)
(74) Vertreter: Maier, Daniel Oliver

(56) Entgegenhaltungen:
- US-B1- 7 619 444
- US-B1- 8 384 428
- US-B1- 8 601 254

## Beschreibung

### Technisches Gebiet

Die Erfindung betrifft ein Verfahren zur Einstellung des Pull-Widerstandes an einem Kontaktanschluss eines auf einer Leiterplatte angeordneten elektronischen Bausteins, insbesondere eines ASICs (*Application Specific Integrated Circuits*), nach der Initiierung eines Neustarts des elektronischen Bausteins, der den elektronischen Baustein während eines Hochlaufvorganges von einem ausgeschalteten Zustand in einen eingeschalteten Zustand versetzt.

Die vorliegende Erfindung bezieht sich dabei auf elektronische Bausteine, die zumeist Teil einer elektronischen Baugruppe sind und auf einem Verdrahtungsträger, der im Folgenden als Leiterplatte (*Printed Circuit Board* PCB) bezeichnet wird, aufgelötet sind. Sie bilden dabei mit den anderen Bauelementen der elektronischen Baugruppe eine konstruktive und in der Regel auch funktionelle Einheit aus integrierten und/oder diskreten und passiven Bauelementen, die durch ein Leitungsnetz auf der Leiterplatte elektrisch und mechanisch verbunden sind. Der elektronische Baustein weist dabei eine Mehrzahl an Kontaktleitungen auf, die jeweils von Kontaktanschlüssen des elektronischen Bausteins, die durch logische Programmierung belegte und unbelegte Kontaktanschlüsse umfassen, über Lötverbindungen zur Leiterplatte verlaufen. Auf der Leiterplatte werden die Kontaktleitungen als Leiterbahnen weitergeführt, wo sie beispielsweise zu einem anderen elektronischen Bauelement, etwa einem anderen elektronischen Baustein oder einem Interface-Baustein, führen können.

Als Kontaktanschlüsse werden im Folgenden jene Signal- und Spannungsversorgungsanschlüsse des elektronischen Bausteins verstanden, die über die so genannten Bond Wires mit den Lötverbindungen zur Leiterplatte verbunden sind. Bei BGAs (*Ball Grid Arrays*) und FCBGAs (*Flip-Chip Ball Grid Arrays*) handelt es sich bei den Lötverbindungen um Lötkugeln (*balls*), über die das BGA-Gehäuse bzw. das FCBGA-Gehäuse an der Leiterplatte befestigt wird. Bei QFPs (*Quad Fiat Packages*) werden so genannte Pins auf die Leiterplatte aufgelötet, die jeweils den Kontaktanschlüssen eindeutig zugeordnet sind, wobei die Begriffe "Pins" und "Balls" in der Praxis austauschbar verwendet werden, da etwa bei ASICs das Package in bestimmten Grenzen frei wählbar ist.

Innerhalb des Bausteins sind die Kontaktanschlüsse in der Regel mit IO-Buffer verbunden, die am Ausgang des elektronischen Bausteins angeordnet sind und die betreffende Kontaktleitung mit ihrem spezifischen physikalischen Verhalten treiben.

### Stand der Technik

Elektronische Bausteine bieten meist durch komplexe Multiplexverfahren für unterschiedliche Applikationen verschiedene Interfaces auf demselben Kontaktanschluss ("Pin"), beispielsweise bei einem SPI (*Serial Peripheral Interface*) oder bei UART (*Universal Asynchronous Receiver*/*Transmitter*). Diese verschiedenen Interfaces benötigen aufgrund ihrer IO-Charakteristik, also ob sie ausschließlich als Eingang, ausschließlich als Ausgang oder bidirektional betrieben werden, und der Interface-Charakteristik, also je nach Interface-Protokoll oder low/high-aktivem Betrieb, eine unterschiedliche Beschaltung durch Pull-up-Widerstände oder Pull-down-Widerstände. Diese Pull-Widerstände werden aus Kostengründen nicht auf der Platine sondern im elektronischen Baustein integriert.

Die Einstellung dieser Widerstände, also die Aktivierung oder Deaktivierung eines Pull-up- Widerstandes oder eines Pull-Down-Widerstandes zu einem bestimmten Kontaktanschluss, kann durch entsprechende Software-Register im elektronischen Baustein in Abhängigkeit von der Konfiguration des Pin-Multiplexing geändert werden. Im Falle eines Neustarts des elektronischen Bausteins ("Reset"), etwa während des Einschaltvorganges oder beim Betätigen einer Reset-Taste, wird diese Einstellung jedoch wieder auf einen standardmäßig vorgegebenen Initialwert ("Default-Wert") zurückgesetzt. Ein Power-on Reset etwa wird durch eine interne Resetschaltung ausgelöst, wenn die Betriebsspannung unter einen Grenzwert sinkt, sowie beim Einschalten der Stromversorgung. Insbesondere werden bei einem Reset auch alle IO-Register auf ihren Initialwert gesetzt. Der zuletzt aktuelle Wert für die Aktivierung oder Deaktivierung eines Pull-Widerstandes zu einem Kontaktanschluss, der sich vom Default-Wert auch unterscheiden kann, geht dadurch zunächst verloren, bis von der Software des elektronischen Bausteins wieder eine gewünschte Einstellung der Pull-Widerstände vorgenommen wurde. Während der Zeitperiode vom Ende des Hochlaufvorganges bis zur Aktivierung einer gewünschten Einstellung ist jedoch mitunter eine unerwünschte Einstellung eines Pull-Widerstandes aktiv, was zu Fehlfunktionen führen kann. In sicherheitskritischen Anwendungen kann eine solche Fehlfunktion fatal sein. In herkömmlicher Weise werden daher auf der Leiterplatte je nach Anwendung redundante Pull-Widerstände angeordnet, die jedoch zusätzliche Kosten verursachen.

Aus dem Dokument US 8,601,254 B1 sind programmierbare I/O-Pins eines elektronischen programmierbaren Systems bekannt, welche je nach Konfiguration einen unterschiedlichen Betriebsstatus für den Austausch von externen Daten annehmen können. Die I/O-Pins werden durch in einer Speichereinheit gespeicherte Defaultwerten bei der Systeminitialisierung oder bei einem Reset konfiguriert.

Aus dem Dokument US 8,384,428 B1 sind ebenfalls durch gespeicherte Daten programmierbare I/O-Pins eines elektronischen programmierbaren Systems bekannt.

### Darstellung der Erfindung

Es ist daher eine Aufgabe der vorliegenden Erfindung ein Verfahren zur Einstellung der Pull-Widerstände eines elektronischen Bausteins bereit zu stellen, das eine unerwünschte Einstellung der Pull-Widerstände bei einem Reset des elektronischen Bausteins zuverlässig verhindert und insbesondere sicherstellt, dass die Pull-Widerstände des elektronischen Bausteins bereits unmittelbar nach dem Reset korrekt eingestellt sind.

Diese Aufgabe wird durch ein Verfahren mit den Merkmalen des Patentanspruchs 1 gelöst.

Anspruch 1 bezieht sich auf ein Verfahren zur Einstellung des Pull-Widerstandes an einem Kontaktanschluss eines auf einer Leiterplatte angeordneten elektronischen Bausteins, insbesondere eines ASICs, nach der Initiierung eines Neustarts des elektronischen Bausteins, der den elektronischen Baustein während eines Hochlaufvorganges von einem ausgeschalteten Zustand in einen eingeschalteten Zustand versetzt. Erfindungsgemäß wird hierbei vorgeschlagen, dass nach Initiierung des Neustarts während des Hochlaufvorganges von einer auf dem elektronischen Baustein angeordneten und während des Hochlaufvorganges betriebsbereiten Teilschaltung eine Einstellungsinformation über eine gewünschte Einstellung des Pull-Widerstandes von einer auf der Leiterplatte außerhalb des elektronischen Bausteins angeordneten Speichereinheit abgerufen und über eine Kontaktleitung zwischen dem elektronischen Baustein und der Speichereinheit übermittelt wird, wobei der Hochlaufvorgang des elektronischen Bausteins erst nach erfolgter Einstellung des jeweiligen Pull-Widerstandes anhand der abgerufenen Einstellungsinformation abgeschlossen wird.

Es ist somit eine externe Speichereinheit vorgesehen, in der eine Einstellungsinformation über die gewünschten Einstellungen der Pull-Widerstände gespeichert sind. Der elektronische Baustein greift auf diese Speichereinheit während des Hochfahrvorganges zu und erhält auf diese Weise die gewünschte Einstellungsinformation. Der Hochfahrvorgang des elektronischen Bausteins sowie der sonstigen Bauelemente der elektronischen Baugruppe, insbesondere allfälliger Interface-Bausteine, wird hierfür um jene Zeitdauer verlängert, die zur Übermittlung der Einstellungsinformation aus der Speichereinheit benötigt wird. Jene Teilschaltung des elektronischen Bausteins, der hierfür mit der externen Speichereinheit kommuniziert, wird hierfür früher aus dem Hochfahrvorgang entlassen und in einen betriebsbereiten Zustand versetzt. Der Hochlaufvorgang des elektronischen Bausteins sowie sonstiger elektronischer Bauelemente der betreffenden Baugruppe wird jedoch erst nach erfolgter Einstellung der jeweiligen Pull-Widerstände anhand der abgerufenen Einstellungsinformation abgeschlossen. Falls mehrere Pull-Widerstände für eine Mehrzahl an Kontaktanschlüssen eingestellt werden müssen, wird der Hochfahrvorgang erst nach erfolgter Einstellung aller gewünschten Pull-Widerstände anhand der abgerufenen Einstellungsinformation abgeschlossen.

Die Speichereinheit kann überaus einfach ausgeführt werden, da sie lediglich die Einstellungsinformation für die Pull-Widerstände bereithalten muss. Für die Einstellung des jeweiligen Pull-Widerstandes werden zwei Bits benötigt. Für die Übermittlung der Einstellungsinformation verfügt die Speichereinheit über eine Spannungsversorgung und einen funktionalen IO-Anschluss, der über eine Kontaktleitung mit dem elektronischen Baustein verbunden ist. Es ist dabei vorgesehen, dass nach Initiierung des Neustarts ein mit der Kontaktleitung zum elektronischen Baustein verbundener IO-Anschluss der Speichereinheit während des Hochlaufvorganges als Eingang betrieben wird und nach Empfang eines Befehls von der Teilschaltung des elektronischen Bausteins zur Übermittlung der Einstellungsinformation während des Hochlaufvorganges als Ausgang betrieben wird.

Für den Abruf und den Empfang der Einstellungsinformation wird ferner vorgeschlagen, dass nach Initiierung des Neustarts während des Hochlaufvorganges ein weiterer und mit der Kontaktleitung zur Speichereinheit verbundener Kontaktanschluss des elektronischen Bausteins in einen IO-Anschluss umgewandelt wird.

Um die funktionale Sicherheit (Safety) des erfindungsgemäßen Verfahren zu erhöhen kann außerdem vorgesehen sein, dass bei Übermittlung der Einstellungsinformation zusätzlich ein Prüfwert für die Daten der Einstellungsinformation übermittelt wird, mit dem nach dem Abruf der Einstellungsinformation durch den elektronischen Baustein die fehlerlose Übermittlung und Speicherung der Einstellungsinformation geprüft wird, wobei der Hochlaufvorgang nur bei fehlerloser Übermittlung und Speicherung der Einstellungsinformation abgeschlossen wird. Die Ermittlung und Anwendung solcher Prüfwerte ist an sich bekannt, beispielsweise im Rahmen einer zyklischen Redundanzprüfung (*Cyclic Redundancy Check* CRC). Vor der Datenspeicherung und der Übermittlung der Daten wird dabei für jeden Datenblock der zu übertragenden Daten zusätzliche Redundanz in Form des Prüfwerts (CRC-Wert) angefügt. Dieser Prüfwert wird nach einem bestimmten Verfahren berechnet. Zur Überprüfung der Daten wird dasselbe Berechnungsverfahren auf den Datenblock einschließlich des angefügten Prüfwerts angewandt.

Zur Absicherung gegenüber böswilligen Manipulationen wird ferner vorgeschlagen, dass die Einstellungsinformation zwischen der Speichereinheit und dem elektronischen Baustein verschlüsselt und authentifiziert übermittelt wird, wobei der Hochlaufvorgang nur bei fehlerloser Entschlüsselung und Authentizitätsprüfung der Einstellungsinformation abgeschlossen wird. Eine Möglichkeit besteht etwa mithilfe eines Betriebsmodus, bei dem Blockchiffren für eine symmetrische Verschlüsselungsanwendung betrieben werden können (*Galois Counter Mode GCM*). Als wesentliche Eigenschaft bietet er einen authentifizierten Verschlüsselungsmodus mit assoziierten Daten an, um sowohl die Authentifikation als auch die Verschlüsselung von Daten zu ermöglichen. Der Betriebsmodus einer Blockchiffre, beispielsweise "*Advanced Encryption Standard (AES)",* ermöglicht dabei die Verschlüsselung der Daten.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:

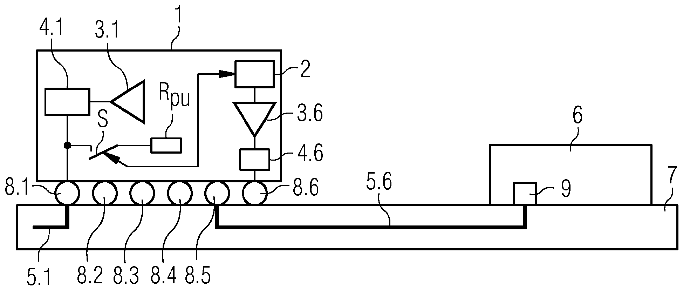

- Fig. 1: eine schematische Darstellung einer Ausführungsform einer Anordnung elektronischer Bauelemente zur Durchführung des erfindungsgemäßen Verfahrens.

### Ausführung der Erfindung

Zunächst wird auf die Fig. 1 Bezug genommen, die eine schematische Darstellung einer Anordnung elektronischer Bauelemente zur Durchführung des erfindungsgemäßen Verfahrens zeigt. Die Anordnung umfasst einen elektronischen Baustein 1, der auf einer Leiterplatte 7 aufgelötet ist. Beim elektronischen Baustein 1 handelt es sich etwa um einen als BGA-Package ausgeführten Chip, der über Lötkugeln 8 auf der Leiterplatte 7 befestigt ist. Diese Lötverbindungen 8 sind Teil von Kontaktleitungen 5, die jeweils von Kontaktanschlüssen 4 des elektronischen Bausteins 1 über die Lötverbindungen 8 zur Leiterplatte 7 verlaufen. Auf der Leiterplatte 7 werden die Kontaktleitungen 5 als Leiterbahnen weitergeführt, wo sie zu anderen elektronischen Bauelemente, beispielsweise einem weiteren als BGA-Package ausgeführten Chip oder einem Interface-Baustein, führen können.

Der elektronische Baustein 1 weist freilich eine Mehrzahl an Kontaktleitungen 5 auf, die jeweils von Kontaktanschlüssen 4 des elektronischen Bausteins 1 zur Leiterplatte 7 verlaufen, auch wenn in der Fig. 1 aus Gründen der Übersichtlichkeit lediglich eine Kontaktleitung 5.1 eingezeichnet ist.

Die in der Fig. 1 eingezeichnete Kontaktleitung 5.1 führt von einem Kontaktanschluss 4.1 des elektronischen Bausteins 1 über die Lötverbindung 8.1 zur Leiterplatte 7.

Die Kontaktanschlüsse 4 sind ferner mit einem Buffer 3 versehen, der jeweils am Ausgang des elektronischen Bausteins 1 angeordnet ist und die betreffende Kontaktleitung 5 (in der Fig. 1 beispielsweise die Kontaktleitung 5.1) mit ihrem spezifischen physikalischen Verhalten treibt.

Die Fig. 1 zeigt ferner einen Schalter S, über den ein Pull-up-Widerstand Rₚᵤ dem Kontaktanschluss 4.1 zugeschaltet werden kann. Falls der Schalter S geschlossen ist, sodass der Pull-up-Widerstand Rₚᵤ zum entsprechenden Kontaktanschluss 4.1 zugeschalten wurde, "zieht" der Pull-up-Widerstand Rₚᵤ den entsprechenden Kontaktanschluss 4.1 auf eine positive Betriebsspannung +U_{B}. Falls ein Pull-down-Widerstand R_{pd} zum entsprechenden Kontaktanschluss 4.1 zugeschalten wird, "zieht" der Pull-down-Widerstand R_{pd} den entsprechenden Kontaktanschluss 4.1 auf Masse. Auf diese Weise können auch Pegelzustände definiert werden, die dem logischen Wert "0" oder "1" entsprechen.

Eine wichtige Größe ist der Zustand, den die Kontaktanschlüsse 4 (auch als "Pins" oder "Ports" bezeichnet) bei einem Reset einnehmen, also während des Einschaltvorgangs oder beim Betätigen einer Reset-Taste. Jeder einzelne Kontaktanschluss 4 verfügt in der Regel über jeweils einen Pull-up-Widerstand Rₚᵤ bzw. Pull-down-Widerstand R_{pd}, die für jeden Kontaktanschluss 4 separat aktiviert oder deaktiviert werden können. Diese Pull-Widerstände begrenzen den Strom, der durch den jeweiligen Kontaktanschluss 4 fließt, wenn der betreffende Kontaktanschluss 4 als Input oder Output genutzt wird. Falls externe Peripherie gesteuert werden soll, muss ebenfalls bekannt sein, ob und wie diese Pull-Widerstände konfiguriert sind.

Daher wird im Rahmen der vorliegenden Erfindung die Verwendung einer externen Speichereinheit 6 vorgeschlagen, die über eine Kontaktleitung 5.6 und der Lötverbindung 8.6 mit dem Kontaktanschluss 4.6 des elektronischen Bausteins 1 verbunden ist. Der Kontaktanschluss 4.6 ist wiederum mit einem ihm zugeordneten Buffer 3.6 verbunden, der von einer Teilschaltung 2 des elektronischen Bausteins 1 angesteuert wird. Nach Initiierung des Neustarts während des Hochlaufvorganges wird der mit der Kontaktleitung 5.6 zur Speichereinheit 6 verbundene funktionale Kontaktanschluss 4.6 des elektronischen Bausteins 1 in einen IO-Anschluss umgewandelt. Die Teilschaltung 2 ruft in weiterer Folge die Einstellungsinformation für die Pull-Widerstände, unter anderem für den in der Fig. 1 dargestellten Pull-up-Widerstand Rₚᵤ, von der Speichereinheit 6 ab und bedient die Schalter S zur gewünschten Einstellung der Pull-Widerstände, unter anderem den in der Fig. 1 eingezeichneten Schalter S.

Die Speichereinheit 6 kann hierfür überaus einfach ausgeführt werden, da sie lediglich die Einstellungsinformation für die Pull-Widerstände, unter anderem für den in der Fig. 1 dargestellten Pull-up-Widerstand Rₚᵤ, bereithalten muss. Für die Einstellung des jeweiligen Pull-Widerstandes werden zwei Bits benötigt. Für die Übermittlung der Einstellungsinformation verfügt die Speichereinheit 6 über eine Spannungsversorgung und einen funktionalen IO-Anschluss 9, der über eine Kontaktleitung 5.6 mit dem elektronischen Baustein 1 verbunden ist. Der mit der Kontaktleitung 5.6 zum elektronischen Baustein 1 verbundene IO-Anschluss 9 der Speichereinheit 6 wird nach Initiierung des Neustarts während des Hochlaufvorganges zunächst als Eingang betrieben, um Befehle zur Übermittlung der Einstellungsinformation von der Teilschaltung 2 empfangen zu können. Nach Empfang eines solchen Befehls zur Übermittlung der Einstellungsinformation von der Teilschaltung 2 wird der IO-Anschluss 9 während des Hochlaufvorgangs als Ausgang betrieben, um die Einstellungsinformation dem elektronischen Baustein 1 übermitteln zu können. Die Speichereinheit 6 kann ferner einen internen Ring-Oszillator umfassen, der als Takt dient.

Zur Erhöhung der Datensicherheit kann außerdem vorgesehen sein, dass vor der Übermittlung der Einstellungsinformation ein Prüfwert für die Daten der Einstellungsinformation ermittelt wird, der in der Speichereinheit 6 gespeichert ist und bei Abruf der Einstellungsinformation durch den elektronischen Baustein 1 zusätzlich zur Einstellungsinformation übermittelt wird. Mithilfe des Prüfwerts wird die fehlerlose Übermittlung und Speicherung der Einstellungsinformation geprüft, wobei der Hochlaufvorgang nur bei fehlerloser Übermittlung und Speicherung der Einstellungsinformation abgeschlossen wird. Ferner kann vorgesehen sein, dass die Einstellungsinformation zwischen der Speichereinheit 6 und dem elektronischen Baustein 1 verschlüsselt übermittelt wird, wobei der Hochlaufvorgang nur bei fehlerloser Entschlüsselung der Einstellungsinformation abgeschlossen wird.

Es ist somit eine externe Speichereinheit 6 vorgesehen, in der eine Einstellungsinformation über die gewünschten Einstellungen der Pull-Widerstände, unter anderem für den in der Fig. 1 dargestellten Pull-up-Widerstand Rₚᵤ, gespeichert sind. Der elektronische Baustein 1 greift auf diese Speichereinheit 6 während des Hochfahrvorganges zu und erhält auf diese Weise die gewünschte Einstellungsinformation über den in der Fig. 1 ersichtlichen Kontaktanschluss 4.6. Der Hochfahrvorgang des elektronischen Bausteins 1 sowie der sonstigen Bauelemente der elektronischen Baugruppe, insbesondere allfälliger Interface-Bausteine, wird hierfür um jene Zeitdauer verlängert, die zur Übermittlung der Einstellungsinformation aus der Speichereinheit 6 benötigt wird. Jene Teilschaltung 2 des elektronischen Bausteins 1, der hierfür mit der externen Speichereinheit 6 kommuniziert, wird hierfür früher aus dem Hochfahrvorgang entlassen und in einen betriebsbereiten Zustand versetzt. Der Hochlaufvorgang des elektronischen Bausteins 1 sowie sonstiger elektronischer Bauelemente der betreffenden Baugruppe wird jedoch erst nach erfolgter Einstellung der jeweiligen Pull-Widerstände anhand der abgerufenen Einstellungsinformation abgeschlossen. Falls mehrere Pull-Widerstände für eine Mehrzahl an Kontaktanschlüssen 4 eingestellt werden müssen, wird der Hochfahrvorgang erst nach erfolgter Einstellung aller gewünschten Pull-Widerstände anhand der abgerufenen Einstellungsinformation abgeschlossen.

Mithilfe der Erfindung wird somit ein Verfahren zur Einstellung der Pull-Widerstände eines elektronischen Bausteins 1 bereitgestellt, das eine unerwünschte Einstellung der Pull-Widerstände nach einem Reset des elektronischen Bausteins 1 zuverlässig verhindert und insbesondere sicherstellt, dass die Pull-Widerstände des elektronischen Bausteins 1 bereits unmittelbar nach dem Reset korrekt eingestellt sind. Eine applikationsabhängige Beschaltung der Platine mit Pull-Widerständen kann dabei entfallen, wodurch sich Kostenvorteile ergeben. Die unverzüglich korrekte Einstellung der Pull-Widerstände für die Kontaktanschlüsse 4 nach einem Reset wird vielmehr nicht durch hardwareseitige Maßnahmen erreicht, sondern durch entsprechende Programmierung des elektronischen Bausteins 1.

### Bezugszeichenliste:

- 1: elektronischer Baustein
- 2: Teilschaltung
- 3: Buffer
- 4: Kontaktanschluss
- 5: Kontaktleitung
- 6: Speichereinheit
- 7: Leiterplatte
- 8: Lötverbindung
- 9: IO-Anschluss der Speichereinheit
- Rₚᵤ: Pull-up-Widerstand
- S: Schalter

## Patentansprüche

1. Verfahren zur Einstellung des Pull-Widerstandes (Rₚᵤ) an einem Kontaktanschluss (4) eines auf einer Leiterplatte (7) angeordneten elektronischen Bausteins (1), insbesondere eines ASICs, nach der Initiierung eines Neustarts des elektronischen Bausteins (1), der den elektronischen Baustein (1) während eines Hochlaufvorganges von einem ausgeschalteten Zustand in einen eingeschalteten Zustand versetzt, wobei nach Initiierung des Neustarts während des Hochlaufvorganges von einer auf dem elektronischen Baustein (1) angeordneten und während des Hochlaufvorganges betriebsbereiten Teilschaltung (2) eine Einstellungsinformation über eine gewünschte Einstellung des Pull-Widerstandes (Rₚᵤ) von einer auf der Leiterplatte (7) außerhalb des elektronischen Bausteins (1) angeordneten Speichereinheit (6) abgerufen und über eine Kontaktleitung (5.6) zwischen dem elektronischen Baustein (1) und der Speichereinheit (6) übermittelt wird, wobei der Hochlaufvorgang des elektronischen Bausteins (1) erst nach erfolgter Einstellung des jeweiligen Pull-Widerstandes (Rₚᵤ) anhand der abgerufenen Einstellungsinformation abgeschlossen wird, **dadurch gekennzeichnet, dass** nach Initiierung des Neustarts ein mit der Kontaktleitung (5.6) zum elektronischen Baustein (1) verbundener IO-Anschluss (9) der Speichereinheit (6) während des Hochlaufvorganges als Eingang betrieben wird und nach Empfang eines Befehls von der Teilschaltung (2) des elektronischen Bausteins (1) zur Übermittlung der Einstellungsinformation während des Hochlaufvorganges als Ausgang betrieben wird.

2. Verfahren nach Anspruch 1, **dadurch gekennzeichnet, dass** nach Initiierung des Neustarts während des Hochlaufvorganges ein weiterer und mit der Kontaktleitung (5.6) zur Speichereinheit (6) verbundener Kontaktanschluss (4.6) des elektronischen Bausteins (1) in einen IO-Anschluss umgewandelt wird.

3. Verfahren nach einem der Ansprüche 1 bis 2, **dadurch gekennzeichnet, dass** bei Übermittlung der Einstellungsinformation zusätzlich ein Prüfwert für die Daten der Einstellungsinformation übermittelt wird, mit dem nach dem Abruf der Einstellungsinformation durch den elektronischen Baustein (1) die fehlerlose Übermittlung und Speicherung der Einstellungsinformation geprüft wird, wobei der Hochlaufvorgang nur bei fehlerloser Übermittlung und Speicherung der Einstellungsinformation abgeschlossen wird.

4. Verfahren nach einem der Ansprüche 1 bis 3, **dadurch gekennzeichnet, dass** die Einstellungsinformation zwischen der Speichereinheit (6) und dem elektronischen Baustein (1) verschlüsselt und authentifiziert übermittelt wird, wobei der Hochlaufvorgang nur bei fehlerloser Entschlüsselung und Authentizitätsprüfung der Einstellungsinformation abgeschlossen wird.

## Claims

1. Method for adjusting the pull resistance (Rₚᵤ) to a contact terminal (4) of an electronic module (1) arranged on a conductor board (7), in particular an ASIC, after initiating a restart of the electronic module (1), which transfers the electronic module (1) during a run-up procedure from a switched-off state into a switched-on state, wherein after initiating the restart during the run-up procedure from a partial circuit (2) which is arranged on the electronic module (1) and is operationally ready during the run-up procedure, adjustment information relating to a desired adjustment of the pull-up resistance (Rₚᵤ) is recalled from a memory unit (6) arranged on the conductor board (7) outside of the electronic module (1) and is transmitted via a contact line (5.6) between the electronic module (1) and the memory unit (6), wherein the run-up procedure of the electronic module (1) is only concluded after adjusting the respective pull-resistance (Rₚᵤ) on the basis of the called-up adjustment information, **characterised in that** after initiating a restart, an IO terminal (9) of the memory unit (6) connected with the contact line (5.6) to the electronic module (1) is operated as an input during the run-up procedure and after receiving a command from the partial circuit (2) of the electronic module (1) to transmit the adjustment information during the run-up procedure is operated as an output.

2. Method according to claim 1, **characterised in that** after initiating a restart during the run-up procedure, a further contact terminal (4.6) of the electronic module (1) connected with the contact line (5. 6) to the memory unit (6) is converted into an IO terminal.

3. Method according to one of claims 1 to 2, **characterised in that** when the adjustment information is transmitted, a test value for the data of the adjustment information is additionally transmitted, with which after recalling the adjustment information by means of the electronic module (1), the faultless transmission and storage of the adjustment information is tested, wherein the run-up procedure is only concluded with a faultless transmission and storage of the adjustment information.

4. Method according to one of claims 1 to 3, **characterised in that** the adjustment information between the memory unit (6) and the electronic module (1) is transmitted encrypted and authenticated, wherein the run-up procedure is only concluded with a faultless decryption and authentication test of the adjustment information.

## Revendications

1. Procédé de réglage de la résistance pull (Rpu) à une borne de contact (4) d'un composant électronique (1) agencé sur une carte de circuit imprimé (7), et plus particulièrement d'un ASIC, après le lancement d'un redémarrage du composant électronique (1) qui, pendant une opération de démarrage, fait passer le composant électronique (1) d'un état coupé à un état enclenché, dans lequel, après le lancement du redémarrage pendant l'opération de démarrage d'un sous-circuit (2) agencé sur le composant électronique (1) et prêt à fonctionner pendant l'opération de démarrage, une information de réglage sur un réglage souhaité de la résistance pull (Rpu) est appelée par une unité de mémoire (6) agencée sur la carte de circuit imprimé (7) en dehors du composant électronique, et transmise via une ligne de contact (5.6) entre le composant électronique (1) et l'unité de mémoire (6), l'opération de démarrage du composant électronique (1) n'étant terminée qu'après réalisation du réglage de la résistance pull respective (Rpu) à l'aide de l'information de réglage appelée, **caractérisé en ce que**, après le lancement du redémarrage, une borne IO (9) de l'unité de mémoire (6) reliée à la ligne de contact (5.6) vers le composant électronique (1) est exploitée en tant qu'entrée pendant l'opération de démarrage et est exploitée en tant que sortie après la réception d'un ordre du sous-circuit (2) du composant électronique (1) pour la transmission de l'information de réglage pendant l'opération de démarrage.

2. Procédé selon la revendication 1, **caractérisé en ce que**, après le lancement du redémarrage, pendant l'opération de démarrage, une autre borne de contact (4.6) du composant électronique (1) reliée à la ligne de contact (5.6) vers l'unité de mémoire (6) est convertie en une borne IO.

3. Procédé selon l'une des revendications 1 à 2, **caractérisé en ce qu'**est additionnellement transmise, lors de la transmission de l'information de réglage, une valeur de contrôle pour les données de l'information de réglage, avec laquelle est contrôlée, après l'appel de l'information de réglage, par le composant électronique (1), la transmission et la sauvegarde sans erreur de l'information de réglage, l'opération de démarrage n'étant terminée que si l'information de réglage est transmise et sauvegardée sans erreur.

4. Procédé selon l'une des revendications 1 à 3, **caractérisé en ce que** l'information de réglage est transmise de manière cryptée et authentifiée entre l'unité de mémoire (6) et le composant électronique (1), l'opération de démarrage n'étant terminée que si l'information de réglage est décryptée et son authenticité, vérifiée sans erreur.
